# EUROPEAN PATENT APPLICATION

(11) **EP 4 166 219 A1**
(43) Date of publication of application: **19.04.2023**
(21) Application number: 22200462.4
(22) Date of filing: 10.10.2022
(51) Int. Cl.: B01D 53/50

(54) **A METHOD AND A SYSTEM FOR REMOVING HARMFUL COMPOUNDS FROM A POWER PLANT**

(30) Priority: 14.10.2021 FI 20216062
(71) Applicant: Valmet Technologies Oy, 02150 Espoo (FI)
(72) Inventor: HANNULA, Kalle, 33900 Tampere (FI); HANNULA, Olli, 33900 Tampere (FI)
(74) Representative: Berggren Oy

(57) **Abstract**

The invention relates to a method for removing harmful compounds from a power plant, the method comprising: burning material in a furnace of a fluidized bed boiler (100), thereby forming a flue gas, conveying the flue gas to a scrubber (200), adding magnesium hydroxide to an aqueous scrubbing solution, conveying the aqueous scrubbing solution to the scrubber (200), scrubbing the flue gas with the aqueous scrubbing solution, whereby at least some compounds in the flue gas reacts with magnesium ions, thereby producing a scrubber solution containing magnesium compounds, conveying at least some of the scrubber solution from the scrubber to the fluidized bed boiler, and removing at least some magnesium compounds from the furnace of the fluidized boiler in a solid form. The invention further relates to a system for removing harmful compounds from a power plant and a use of magnesium hydroxide as a scrubber alkali.

## Description

### Field of the invention

The invention relates to a method for removing harmful compounds from a power plant. The invention further relates to a system for removing harmful compounds from a power plant. The invention further relates to a use of magnesium hydroxide as a scrubber alkali.

### Background of the invention

Power plant flue gases contain several pollutants, such as sulphur dioxide, nitrogen oxides, heavy metals, dust, and chlorides. Flue gases originate from burning of heat source and are often harmful to the environment when being absorbed to water and expelled to nature.

The flue gas cleaning systems may be divided into dry, semi-dry and wet cleaning systems. Flue gas cleaning systems are used to decrease the release of the pollutants, such as sulphur dioxide, to environment. However, there is still a need to improve flue gas cleaning systems.

### Brief summary of the invention

The specification relates to a method and a system for removing at least some harmful components from a power plant. Further, this specification relates to a use of magnesium hydroxide as a scrubber alkali in a system comprising a fluidized bed boiler and a scrubber.

Aspects of the invention are characterized by what is stated in the independent claims. Various embodiments of the invention are disclosed in the dependent claims.

Some harmful compounds can be removed from flue gases produced in a fluidized bed reactor by using magnesium hydroxide as a scrubber alkali.

Flue gas originates from burning of heat source and are often harmful to the environment when being absorbed to water and expelled to nature. The novel method and system can comprise a furnace of a fluidized bed boiler in order to burn the heat source. Flue gas cleaning system comprising a scrubber can be used to decrease the release of pollutants to environment.

A method for removing harmful compounds from a power plant can comprise the following steps:
- burning at least some material in a furnace of a fluidized bed boiler, thereby forming a flue gas,
- conveying the flue gas to a scrubber,
- adding a magnesium hydroxide slurry to an aqueous scrubbing solution,
- conveying the aqueous scrubbing solution to the scrubber,
- scrubbing the flue gas with the aqueous scrubbing solution by contacting the flue gas with the aqueous scrubbing solution in the scrubber, whereby at least some compounds in the flue gas react with magnesium ions, thereby producing a scrubber solution containing magnesium compounds,
- conveying at least some of the scrubber solution from the scrubber to the furnace of the fluidized bed boiler, and
- removing at least some magnesium compounds from the furnace in a solid form.

The method may further comprise the following step:
- mixing the magnesium hydroxide slurry in a slurry tank before adding the magnesium hydroxide slurry to the aqueous scrubbing solution.

Thus, sedimentation of the magnesium hydroxide slurry in the slurry tank can be avoided.

The magnesium hydroxide slurry may comprise magnesium hydroxide at least 50 wt.%, preferably at least 70 wt.%, more preferably at least 80 wt.%, and most preferably at least 90 wt.% calculated from dry solid content of the magnesium hydroxide slurry. Furthermore, the magnesium hydroxide slurry preferably comprises less than 10 wt.% calcium, calculated from dry solid content of the magnesium hydroxide slurry. Thus, the effect of the magnesium hydroxide on the process can be improved.

In order to improve the process, a proportion of calcium compounds can be arranged to be less than 10 % calculated from total amount of calcium and magnesium compounds in the scrubber solution.

In order to prevent sodium related problems, a proportion of sodium compounds can be arranged to be less than 5 %, more preferably less than 2%, calculated from total amount of sodium and magnesium compounds in the scrubber solution.

The method may further comprise the following step:
- removing at least part of particles from the flue gas before the flue gas is conveyed to the scrubber.

Thus, the system may have a particle separator arranged to remove at least some particles from the flue gas before the flue gas is conveyed to the scrubber. This can improve effectiveness of the scrubber.

The method may further comprise the following step:
- directing part of the scrubber solution into the scrubber for re-scrubbing.

By this arrangement, the impurities, such as sulphur compounds, can be converted into magnesium compounds, such as MgSO₄, more efficiently. In an advantageous embodiment, at least 50%, more preferably at least 60% of the formed scrubber solution is directed back into the scrubber for re-scrubbing.

pH of the aqueous scrubbing solution may be arranged to be in a range between 5 and 7. If pH of the aqueous scrubbing solution comprising magnesium is not controlled, some solid compounds may be formed, which may cause e.g. clogging of pipes, heat exchangers and/or a scrubbing solution cleaning equipment. Accurate control of the aqueous scrubbing solution pH also minimizes magnesium consumption and ensures that emissions can be continuously kept below required emission level.

The method may further comprise:
- removing at least some particles from the aqueous scrubbing solution prior to providing the aqueous scrubbing solution into the scrubber.

Magnesium hydroxide Mg(OH)₂ has a low solubility in water and insoluble particles can cause problems in the scrubber. Thus, thanks to this embodiment, some insoluble particles can be removed from the aqueous scrubbing solution before it is applied into the scrubber in order to improve efficiency of the scrubber. However, thanks to some embodiments of the process, such as mixing of the magnesium hydroxide slurry tank and/or determined solid content of the magnesium hydroxide, there may not be any need to remove particles from the aqueous scrubbing solution prior to providing the aqueous scrubbing solution into the scrubber.

The flue gas may comprise a sulphur oxide or sulphur oxides and the method may further comprise a step of removing at least part of the sulphur oxide(s) from the flue gas in the scrubber. Thanks to the magnesium hydroxide, it is possible to decrease the release of pollutants, such as sulphur dioxide, to environment. Furthermore, magnesium hydroxide can be more effective scrubber alkali than sodium hydroxide. Thus, by using magnesium hydroxide instead of sodium hydroxide, dosage of scrubber alkali can be decreased.

The method can comprise a step of burning fuel in the fluidized bed reactor to produce the flue gas. For environmental reasons, the fuel can comprise of consist of biomass and/or waste.

The method may further comprise a step of conveying at least part of the formed scrubber solution into a cleaning device arranged downstream of the scrubber, before conveying at least some of the scrubber solution (wherefrom at least some water has been removed) to the furnace of the fluidized bed boiler. The cleaning device can provide a cleaned water and a scrubber solution having decreased water content. The cleaning device may comprise one or more than one of: a filter, a separator, and a cyclone.

Prior to scrubbing, heat may be recovered from the flue gas to a heat exchange medium, such as water and/or steam. Further, electricity can be produced by using the heat of the heat exchange medium.

A system arranged to remove harmful compounds from a power plant can comprise:
- a fluidized bed boiler arranged to form a flue gas,
- a first conduit to feed the flue gas into a scrubber,
- a second conduit configured to convey an aqueous scrubbing solution containing magnesium ions to a scrubber,
- the scrubber arranged to produce a scrubber solution containing magnesium compounds by contacting the flue gas with the aqueous scrubbing solution in the scrubber,
- a first line configured to convey at least some of the scrubber solution from the scrubber to a furnace of the fluidized bed boiler, and
- means for removing at least some of said magnesium compounds from the furnace in a solid form.

The means for removing at least some magnesium compounds from the furnace in a solid form may comprise a mechanical or pneumatical fly ash removal system and, for example, a mechanical bottom. This kind of means can be used to efficiently remove magnesium compounds, such as MgSO₄, from the system. Thus, thanks to said means, some harmful compounds can be removed from the system.

Thus, it is possible to remove harmful compounds from the produced flue gas, circulate the removed material back into the furnace, and finally remove at least part of said material from the boiler in a solid form.

The system may further comprise a slurry tank for magnesium hydroxide slurry, which may be arranged upstream of the scrubber. The slurry tank may comprise frequent or continuous recirculation of slurry. The slurry tank may comprise, for example, an agitator. Thus, sedimentation of the magnesium hydroxide slurry in the slurry tank can be avoided.

The system may further comprise at least one pump and at least one valve, which may be arranged to control a flow of the scrubber solution from the scrubber. Thus, an amount of the scrubber solution expelled from the scrubber can be controlled.

The system may further comprise at least one pump, and/or at least one valve, which are arranged to control an amount of magnesium hydroxide slurry fed to the aqueous scrubbing solution. Thus, an amount of magnesium in the aqueous scrubbing solution can be controlled. Therefore, an efficiency of the scrubber can be improved.

In an embodiment, the system comprises at least one pump and at least one conduit configured to direct at least some of the scrubber solution to the fluidized bed boiler, such as to the furnace, a cyclone, or a flue gas duct after a combustion zone of a cyclone of the fluidized bed boiler. Preferably, at least some of the scrubber solution is directed to the furnace. In this embodiment, the system may further comprise e.g. at least one valve arranged to control an amount of the scrubber solution directed to the boiler.

In an embodiment, the system comprises at least one pump and at least one conduit configured to add at least some of the scrubber solution to the fuel.

The system may further comprise a cleaning device arranged downstream of the scrubber, between the scrubber and the fluidized bed boiler.

The cleaning device can be arranged to provide cleaned water and scrubber solution having reduced water content, which can also be called as a scrubber sludge. The cleaning device can be arranged e.g. to remove some particles in order to provide the cleaned water.

In an embodiment, the fluidized bed boiler is a bubbling fluidized bed boiler. In another embodiment, the fluidized bed boiler is a circulating fluidized bed boiler.

Surprisingly, desulphurization products containing magnesium in their composition can be stable in temperature conditions typical for fluidized bed furnaces. Thus, magnesium containing sulfation products can be removed from the furnace of the fluidized bed boiler in a solid form. Thermal transformations of magnesium containing sulfation products may begin only after a temperature exceeds 1100°C.

With a fluidized bed boiler, a scrubber, and conduits between the fluidized bed boiler and the scrubber, it can be possible to perform the process in a significantly more viable way than with conventional technical solutions. Furthermore, the solution can be environmentally friendly.

Magnesium hydroxide Mg(OH)₂ can be used as a scrubber alkali, wherein major sulphur capture can be made by the scrubber, after which part of the scrubber solution can be led to a furnace.

If, for example, NaOH was used in that kind of case, it could cause, if led to a furnace, NaSO₄ decomposition in said furnace. Further, in this case, sulphur could accumulate to the process. Therefore, increased SO₂ emission after furnace could cause higher NaOH consumption in the scrubber. These problems can be avoided due to Mg(OH)₂.

Still further, Mg(OH)₂ is non-poisonous and quite harmless chemical. On the contrary, NaOH can be harmful chemical and, particularly, sodium can be very harmful in a furnace of a fluidized bed boiler, causing e.g. bed sintering.

Thanks to the novel solution wherein at least some harmful compounds obtained from flue gas that has been produced in a boiler can be pumped back to the boiler as a scrubber solution, environmental threat caused e.g. by sulphur dioxide can be avoided. The scrubber process waters are nowadays taken to rivers and local water bodies, thus increasing the salinization, which could be a big ecological and environmental threat. Thanks to the novel solution, this problem relating to the harmful compounds, such as sulphur oxides, can be avoided.

### Description of the drawings

In the following, the invention will be described in more detail with reference to the appended drawings, in which:
- Fig. 1a: shows a fluidized bed boiler according to an embodiment,
- Fig. 1b: shows another fluidized bed boiler according to an embodiment,
- Fig. 2: shows a scrubber according to an embodiment, and

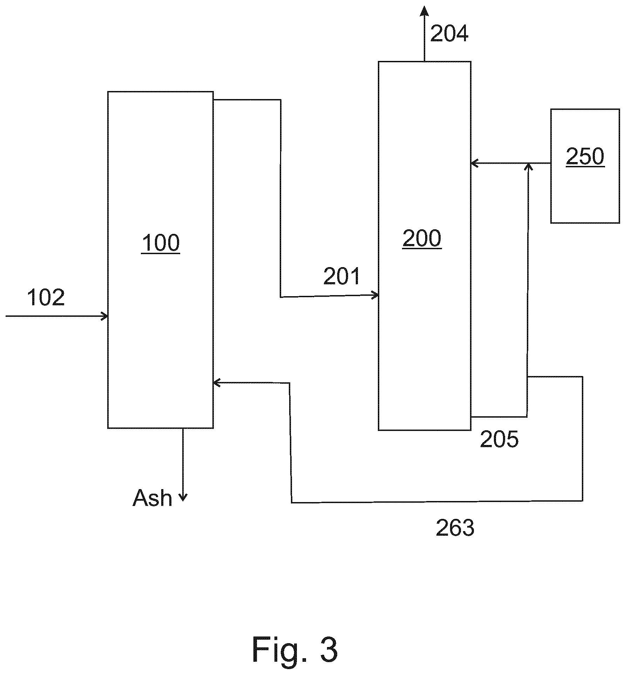

- Fig. 3: shows a system according to an embodiment.

The Figures are intended to illustrate the general principles of the disclosed solution. Therefore, the illustrations in the Figures are not necessarily in scale or suggestive of precise layout of system components. Similar parts are indicated in the figures by the same reference numbers.

### Detailed description of the invention

All embodiments in this application are presented as illustrative examples, and they should not be considered limiting.

The following reference numerals are used in this application:
- 100: fluidized bed boiler,
- 101: bubbling fluidized bed boiler,
- 102: fuel,
- 104, 154: walls of the fluidized bed boiler,
- 106, 156: furnace of the fluidized bed boiler,
- 108, 158: grate of the fluidized bed boiler,
- 110, 160: air supplied through the grate,
- 112: bed material,
- 114, 116,180, 182: heat exchanger,
- 120, 122: flue gases, path of the flue gases,
- 150: circulating fluidized bed boiler,
- 170: circulation of combustion air,
- 170, 172, 174: circulation of the bed material,
- 184: cyclone,
- 192: bottom of the cyclone,
- 200: scrubber,
- 201: first conduit,
- 202: scrubber solution,
- 203: second conduit,
- 204: flue gas derivate,
- 205: first line,
- 206: nozzle,
- 207: packed bed column,
- 208: fourth conduit,
- 210: first pump,
- 211: second line,
- 212, 212b: third line,
- 220: flue gas,
- 231: first valve,
- 232: second valve,
- 233: third valve,
- 234: fourth valve,
- 250: slurry tank,
- 251: second pump,
- 260: cleaning device,
- 261: third pump, and
- 263: third conduit.

For the purpose of the present description and the claims, unless otherwise indicated, all ranges include any combination of the maximum and minimum points disclosed and include any intermediate ranges therein, which may or may not be specifically enumerated herein.

In this application, the term "comprising" may be used as an open term, but it also comprises the closed term "consisting of".

In this application, the term "system" refers to a power plant comprising a fluidized bed boiler and a scrubber.

In this application, the term "boiler" refers to a fluidized bed boiler. The fluidized bed boiler can be a bubbling fluidized bed boiler or a circulating fluidized bed boiler.

The term "BFB boiler" refers to a bubbling fluidized bed boiler, and the term "CFB boiler" refers to a circulating fluidized bed boiler.

The term "scrubber" refers to an air pollution control device, which can be used to remove particulates and/or compounds from flue gas formed by a fluidized bed boiler. An aqueous scrubbing solution can be introduced into the scrubber to collect unwanted pollutants from the flue gas into a scrubber solution.

In this application, the term "scrubbing solution" refers to an aqueous scrubbing solution to be added into the scrubber.

In this application, the term "scrubber solution" refers to an aqueous solution, which is formed in a scrubber by treating a flue gas with the scrubbing solution. The scrubber solution may comprise magnesium compounds such as MgSO₄. Further, the scrubber solution may comprise other impurities.

The term "magnesium compounds" refers to compounds or substances comprising Mg²⁺ entities. The magnesium compounds may particularly include MgSO₄.

### Fluidized bed boiler

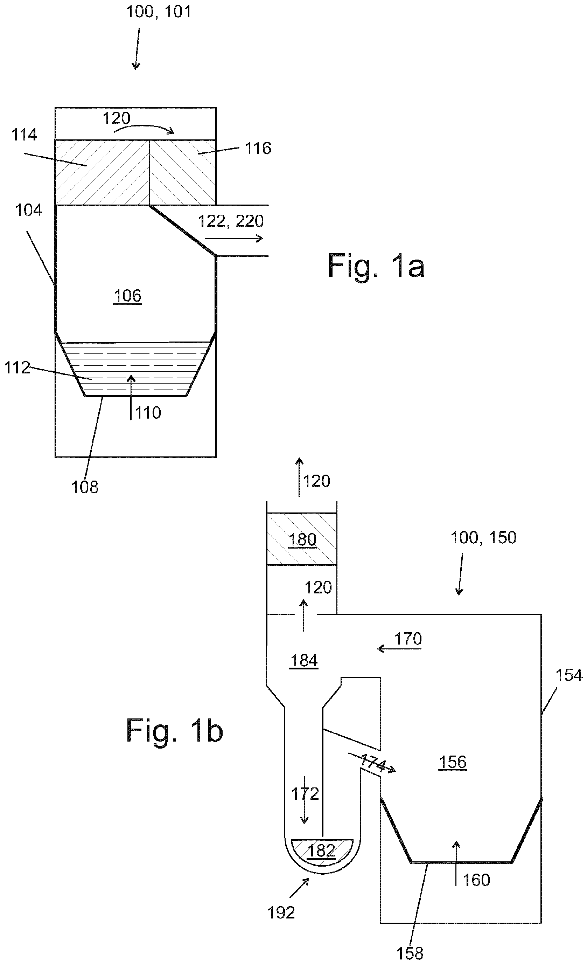

Figures 1a-1b show some examples of a fluidized bed boiler 100.

A fluidized bed boiler 100 can comprise means for heating heat transfer medium. The heat can be recovered from the flue gases of this combustion process by means of heat transfer medium in a heat exchanger.

The boiler 100 can comprise a heat exchanger 114, 116,180, 182, such as a superheater or an economizer. Said heat exchanger can be configured to recover heat from the flue gas to a heat exchange medium, such as water and/or steam.

A heat exchanger 114, 116,180, 182 of a boiler 100 may be configured to feed steam into a turbine that produces energy for a generator. The generator may be configured to transform the energy to electricity. The turbine and the generator, in combination, may form means for producing electricity using the steam obtainable from the boiler 100.

Figure 1a shows an example of a bubbling fluidized bed boiler (BFB boiler) 101. The furnace 106 can be limited on the sides by the walls 104 of the fluidized bed boiler. From below, the furnace can be limited by a grate 108. The furnace of the fluidized bed boiler can comprise incombustible solid bed material 112, such as sand. Air can be supplied through the grate to the furnace, as shown by an arrow 110. By means of the supply of air 110, at least part of the sand can be fluidized, and inflammable material mixed in the sand is burnt. The quantity of air to be supplied to the bubbling fluidized bed boiler can be relatively low, wherein the bed material is fluidized primarily on the bottom of the furnace, on the grate, as shown in Fig. 1a. Heat can be recovered from flue gases by heat exchangers 114 and 116. An example of a path of the flue gases 210 is illustrated with arrows 120 and 122.

Figure 1b shows another example of a fluidized bed boiler 100, 150. The fluidized bed boiler of Fig. 1b is a circulating fluidized bed boiler (CFB boiler) 150. The furnace 156 can be limited on the sides by the walls 154 of the fluidized bed boiler. From below, the furnace can be limited by a grate 158. The furnace of the fluidized bed boiler can comprise incombustible solid heat transfer medium, such as sand. Air can be supplied through the grate to the furnace, as shown by an arrow 160. By means of the supply of air 160, at least part of the sand 112 can be fluidized and circulated, and the inflammable material mixed in the sand can be burnt. Consequently, the quantity of air to be supplied to the circulating fluidized bed boiler can be so high that the bed material and the material to be burnt rise upwards in the furnace 156. The circulation of the bed material is denoted with arrows 170, 172 and 174, whereas the circulation of combustion air is denoted with arrows 160 and 170. In a cyclone 184, at least part of the bed material can be separated from flue gases and returned into the furnace. In the lower parts of the cyclone, heat contained in the bed material can be recovered by a heat exchanger 182. The cyclone can extend down to the bottom 192, from where at least part of the bed material is circulated further to the furnace 156. The heat exchanger 182 may also be placed in the upper parts of the cyclone. An example of a path of flue gases separated in the cyclone is illustrated with an arrow 120. Heat exchangers 180 can be used to recover heat from the flue gases.

### Fuel

In this application, the term "fuel" may include any material suitable to be used in the combustion process of a fluidized bed boiler. The fluidized bed boiler can be configured to burn fuel.

The fuel may comprise coal. Alternatively or in addition, the fuel may comprise waste. Alternatively, or in addition, the fuel may comprise biomass, optionally pre-treated biomass, and/or a gaseous product gas obtained from gasification of biomass.

In this application, the term "biomass" refers to any materials of biological origin. Biomass typically comprises virgin materials and/or waste materials originating from plants, such as wood or grass. In particular, biomass may comprise wood-based materials, that is, so-called forest fuel. Forest fuels include, for example, wood, bark, wood chips, logging residue, stumps, branches, and brushwood.

In an embodiment, the fuel comprises biomass. For environmental reasons, in this embodiment, the biomass can comprise wood-based material and/or waste materials. When the fuel comprises a solid biomass-based compound, the solid biomass-based compound may be ground e.g. from pellets.

### Flue gas

The flue gas 122, 120 is produced in the fluidized bed boiler 100, 101, 150. The flue gas refers to a combustion exhaust gas produced in a furnace of a power plant. The composition of the flue gas depends on what is being burned. Typically, the flue gas comprises at least nitrogen, carbon dioxide, water vapor, and oxygen. It may further contain a number of pollutants, such as particulate matter, carbon monoxide, nitrogen oxides and sulphur oxides. It may also comprise chlorine, especially is the burned material comprises fossil fuels, particularly coal.

Thus, the flue gas typically comprises harmful compounds. At least some of the harmful compounds can be removed from the flue gas by scrubbing the gas in a scrubber 200. For example, the flue gas may comprise sulphur dioxide, which may be removed by a scrubber.

### Aqueous scrubbing solution

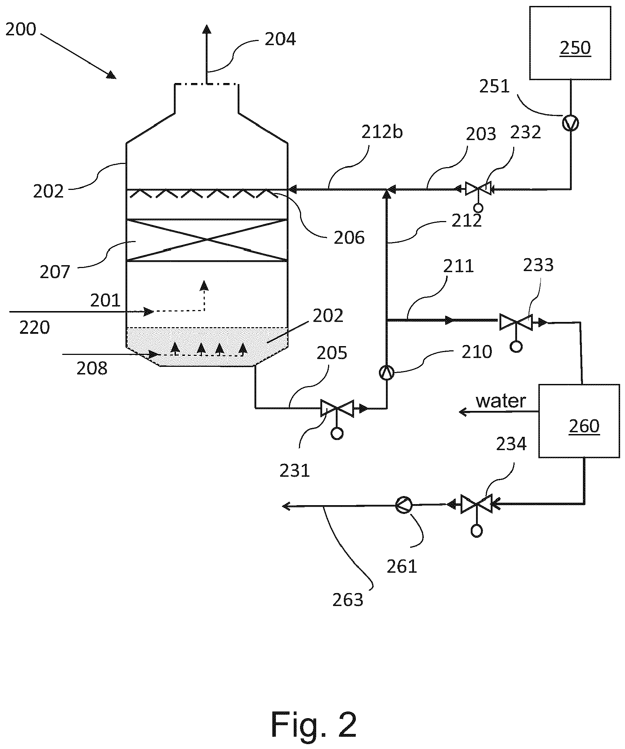

A scrubber 200 can be used to remove at least some harmful compounds from the flue gas. One example of a scrubber is shown in Fig 2. Thus, flue gas containing harmful compounds, such as sulphur compounds, can be scrubbed in the scrubber 200 with an aqueous scrubbing solution containing magnesium ions Mg+.

Magnesium hydroxide Mg(OH)₂ slurry can be added into the aqueous scrubbing solution. Thus, the aqueous scrubbing solution may comprise magnesium hydroxide as a scrubbing chemical, and water. Preferably, the scrubbing solution comprises water and ionic salt of magnesium.

Magnesium hydroxide Mg(OH)₂ is a solid material with low solubility in water. Thus, the magnesium hydroxide can be stored in a slurry tank 250 in a form of a magnesium hydroxide slurry. Solid content of the magnesium hydroxide slurry may be in a range between 35 wt.% and 65 wt.%, preferably in a range between 40 wt.% and 60 wt.%, more preferably in a range between 45 wt.% and 57 wt.%, and most preferably in a range between 50 wt.% and 55 wt.%. This kind of solid content can be particularly useful for controlling pH in the scrubber. Further, if solid content of the magnesium hydroxide slurry is not controlled, some solid compounds may be formed, which may cause e.g. clogging of pipes. The magnesium hydroxide slurry may further comprise at least one additive, such as a stabilizing chemical.

Average particle size in the magnesium hydroxide slurry may be equal to or less than 10 µm, preferably in a range between 0.5 µm and 6 µm, more preferably in a range between 1 µm and 4 µm, and most preferably in a range between 1.5 µm and 3 µm. Preferably, the magnesium hydroxide slurry does not have any particles having a size of equal to or more than 20 µm. Thus, the magnesium particles can dissolve faster to the aqueous scrubbing solution. Therefore, reactions between magnesium and some harmful compounds such as sulphur compounds can happen more efficiently. Furthermore, the aqueous scrubbing solution may not have insoluble particles from the magnesium hydroxide slurry .

The magnesium hydroxide can form magnesium ions in water. Magnesium hydroxide slurry can be added into the aqueous scrubbing solution in order to form aqueous scrubbing solution comprising ionic salt of magnesium. The aqueous scrubbing solution comprising ionic salt of magnesium can react with impurities, such as sulphur compounds, in the flue gas.

Insoluble particles may, in some cases, decrease efficiency of the scrubber. Thus, in an embodiment, a cleaner, such as a hydrocyclone, is arranged to clean the aqueous scrubbing solution before the solution is applied into the scrubber 200. Thus, in this embodiment, some insoluble particles can be removed from the aqueous scrubbing solution before it is applied into the scrubber.

A total amount of magnesium hydroxide Mg(OH)₂ applied into the aqueous scrubbing solution to be added in the scrubber may depend on, for example, needed pH level.

The aqueous scrubbing solution applied to the scrubber can comprise controlled amount of magnesium (Mg). The concentration of magnesium in the aqueous scrubbing solution may depend e.g. on pH. Typically, the concentration of magnesium is quite low. Thus, erosion problems can be avoided, even magnesium hydroxide slurry might otherwise be an abrasive liquid.

Some compounds of the flue gas may react with the magnesium ions of the aqueous scrubbing solution. For example, some sulphur compounds, when reacted, transfer themselves from the gaseous phase into the liquid phase. Thus, the scrubber solution may contain sulphur compounds, such as MgSO₄. At least part of the scrubber solution 202 containing sulphur compounds may then be circulated back to the boiler. Thanks to said circulation, at least some sulphur compounds can be safely removed from the system.

As discussed, in this application, the aqueous scrubbing solution can comprise water and magnesium. The Mg(OH)₂, which may be added into the aqueous scrubbing solution, is typically non-dangerous component in the process. Thus, thanks to the magnesium hydroxide, many problems can be avoided. When Mg(OH)₂ is used as the scrubber alkali in the scrubbing solution, the effect of scrubbing solution can be improved compared to pure water, but there may not be any increased risk of bed sintering or corrosion problems, even when the scrubber solution is fed to a furnace. Still further, because magnesium hydroxide slurry is typically non-dangerous component, there may not be a need for emergency shower etc. specialties for chemical handling.

Furthermore, thanks to the Mg(OH)₂, scrubbing alkali consumption can be substantially decreased. The total amount of the scrubbing alkali may be, for example, approximately 30% lower with Mg(OH)₂ than with NaOH. Furthermore, estimated OPEX values with magnesium hydroxide can be about ¼, if compared to caustic soda. Therefore, magnesium hydroxide can also be cost efficient chemical for the scrubbing process.

Furthermore, caustic soda is typically hazardous chemical, and, thanks to the magnesium hydroxide, the use of this hazardous chemical can be avoided. Moreover, Na₂SO₄ sludge may cause remarkable risk of bed sintering if fed to a furnace of the fluidized bed boiler. Furthermore, Na₂SO₄ may not decompose when e.g. sprayed to a furnace and, hence, it can be enriched to a process.

Preferably, NaOH and other Na based chemical are not used for the aqueous scrubbing solution. Thus, total amount of sodium in the aqueous scrubbing solution may be quite low. The total amount of sodium is preferably less than 5%, more preferably less than 3%, determined from the total amount of sodium and magnesium. Thus, emergency shower etc. specialties for chemical handling of the scrubber alkali may be avoided. Furthermore, Na₂SO₄ may not be enriched to a process.

Further, total amount of sodium in the scrubber solution 202 may be very low. The total amount of sodium in the scrubber solution may equal to or less than 5%, preferably less than 3%, calculated from total amount of sodium and magnesium compounds in the scrubber solution. Therefore, bed sintering and all other similar problems caused by sodium can be avoided. Furthermore, Na₂SO₄ may not be enriched to a process. Amount of sodium in the scrubber solution may advantageously be less than 1%, calculated from total amount of sodium and magnesium compounds in the scrubber solution.

The magnesium hydroxide slurry may be stored in a magnesium slurry tank 250. The magnesium hydroxide slurry can be added into the aqueous scrubbing solution to be supplied into the scrubber 200. Thus, the magnesium hydroxide slurry may be added into the aqueous scrubbing solution before the scrubbing solution is added into the scrubber.

The magnesium hydroxide slurry is preferably mixed in the slurry tank 250 to avoid sedimentation. Thus, the slurry tank 250 may comprise an agitator in order to avoid sedimentation of the magnesium hydroxide slurry. Alternatively, or in addition, a pump may be configured to circulate the magnesium hydroxide slurry in the tank. In this embodiment, said pump may be further configured to apply the magnesium hydroxide slurry to a conduit 203 to be added into the aqueous scrubbing solution.

A shape of the slurry tank can be selected so that the tank does not have such corners in which the slurry might be easily sedimented.

Due to high solid content of the magnesium hydroxide slurry, flushing for magnesium slurry pipe(s), or at least a part of said pipe(s), may be done when a magnesium dosing system is stopped in order to avoid clogging problems of the slurry pipes.

In an embodiment, the slushing water of the slurry pipes may not be mixed with the aqueous scrubbing solution in order to control the amount of magnesium in the scrubbing solution. In another embodiment, the slushing water is mixed with the aqueous scrubbing solution and directed into the scrubber.

A second pump 251 may be arranged to pump at least some of the magnesium hydroxide slurry from the slurry tank 250 towards the scrubber 200. Further, the aqueous scrubbing solution comprising magnesium may be conveyed into the scrubber via a second conduit 203. In an embodiment, the second conduit 203 is a pipe 212b, configured to convey the aqueous scrubbing solution into the scrubber 200.

Thus, the second pump 251 may be arranged to pump the magnesium hydroxide slurry from the slurry tank 250 via the second conduit 203 towards the scrubber 200. The magnesium hydroxide slurry has typically high solid contend, which may cause challenges for the pumping. Therefore, a screw pump or progressive cavity pump can be arranged for pumping the magnesium hydroxide slurry. Thus, the second pump 251 is preferably a screw pump or progressive cavity pump. For example, centrifugal or membrane pumps, which may be used e.g. with caustic soda systems, are not recommended due to high solid content of the magnesium hydroxide slurry.

The amount of the magnesium hydroxide slurry applied from the slurry tank 250 to the scrubber 200 is preferably controlled. Overdosing of the slurry may have an effect e.g. on clogging. A speed of the magnesium hydroxide slurry in the pipe(s) may be in a range between 0.1 m/s and 1.5 m/s to prevent erosion of the pipes. Further, amount of magnesium ions in the aqueous scrubbing solution is preferably within a predetermined range in order to obtain improved scrubbing process. The second pump 251 can be used for controlling a flow of the magnesium hydroxide slurry from the slurry tank. In addition to the second pump 251, a second valve 232 may be used for controlling an inflow of the magnesium hydroxide to the scrubber 200.

pH of the aqueous scrubbing solution can be controlled. The system may have a pH sensor in order to determine pH of the aqueous scrubbing solution. pH of the aqueous scrubbing solution is preferably in a range between 5 and 7, more preferably in a range between 5.3 and 6.7, and most preferably in a range between 5.7 and 6.3. If pH of the scrubbing solution comprising magnesium is not controlled, some solid compounds can be formed, which can cause clogging of pipes. Furthermore, emission level might not be maintained below required emission limit.

Thus, because the magnesium hydroxide is used as a scrubbing chemical, the slurry tank may need an agitator and/or a magnesium recirculation device, and/or slurry pipes may need to be slushed in some periods. However, thanks to the magnesium hydroxide, hazard chemicals, such as NaOH, can be avoided. Furthermore, thanks to the magnesium, the scrubber solution can be conveyed to the fluidized bed boiler and some harmful compounds, such as compounds comprising sulphur entities, can be removed with ash from the boiler.

### Scrubber

One example of a scrubber is shown in Fig 2. The scrubber 200 can be connected to a fluidized bed boiler 100, which can be configured to produce flue gas by burning some material.

The scrubber 200 can be configured to receive the flue gas. A first conduit 201 can be configured to feed the flue gas into the scrubber 200 as shown in the figure 2.

Prior to providing the flue gas into a scrubber 200 temperature of the flue gas may be controlled. The temperature of the flue gas supplied into the scrubber 200 may be in a range between 120°C and 200°C.

A second conduit 203 can be configured to feed the aqueous scrubbing solution into the scrubber 200. In an embodiment, the second conduit 203 is a pipe 212b, configured to convey the aqueous scrubbing solution into the scrubber 200.

The scrubber 200 can be configured to remove at least an oxide or oxides of sulphur (SOx) from the flue gas. The scrubber 200 can be configured to receive the flue gas and the aqueous scrubbing solution comprising water and ionic salt of magnesium (Mg).

When contacted with the aqueous scrubbing solution, for example, at least some of the oxides of sulphur contained by the flue gas are transferred into the aqueous scrubbing solution, thus forming at least part of a scrubber solution. The scrubber solution may be let out from the scrubber 200 via line 205.

At least some of the scrubber solution may be pumped via the line 211 into the boiler 100. Thus, the pump 210 may be arranged to pump some of the scrubber solution into a furnace of the fluidized bed boiler. Further, at least some of the scrubber solution from the scrubber 200 can be pumped by a pump 210 via line(s) 212, 212b back into the scrubber 200.

The contacting of the flue gas and the aqueous scrubbing solution preferably takes place in the contact area of the scrubber 200. The scrubbing can be performed by contacting the flue gas with the aqueous scrubbing solution, hence, the scrubber 200 can be configured to scrub the flue gas with the aqueous scrubbing solution. The scrubber 200 can further be configured to produce a scrubber solution. A first line 205 can be provided for conveying the scrubber solution from the scrubber 200. At least some of the scrubber solution can be conveyed from the scrubber 200 into the furnace of the fluidized bed boiler 100.

The water of the aqueous scrubbing solution fed into the scrubber may be fresh water. The water may, for example, consist of water obtained from a fresh water source. The water obtained from a fresh water source may be purified, for example filtered. Alternatively, the water fed into the scrubber may be, for example, tap water or make-up water of the boiler, which (both) may be in some way purified before use. In an embodiment, the water of the aqueous scrubbing solution comprises at most 1 wt.-% impurities (including salt, particulate impurities etc.). The fresh water may have a sodium chloride (NaCl) content of less than 1 wt.-%. This can decrease a risk for a corrosion.

The aqueous scrubbing solution can absorb some harmful compounds, such as sulphur compounds, from the flue gas, thereby forming the scrubber solution. Part of the scrubber solution can be directed back to the scrubber, to be used as the aqueous scrubbing solution.

The flue gas is scrubbed with the aqueous scrubbing solution by contacting the flue gas with the aqueous scrubbing solution in the scrubber 200. A shell of the scrubber may comprise carbon steel. An inner lining of the shell of the scrubber may comprise a resin-lining in order to protect the inner lining from corrosion.

The scrubber 200 may comprise nozzles 206 configured to spray the aqueous scrubbing solution onto the flue gas.

The scrubber 200 may comprise a contact area configured to improve contact between the flue gas and the aqueous scrubbing solution sprayed onto the flue gas. The contacting of the flue gas and the scrubbing solution preferably takes place in the contact area of the scrubber 200.

The contact area may comprise, for example, a packed bed column 207. In this embodiment, the packed bed column 207 can be filled with a packing material. In this embodiment, the packed bed column 207 may be randomly filled with the packing material or it may comprise a structured packing. The scrubber may be 7-16 m in diameter, in Sx-direction.

Thus, the contact area may comprise a packed bed column 207. Alternatively, the flue gas may be contacted with scrubbing solution without a packed bed column, for example in a bath of a scrubbing solution, through which the flue gas runs, and/or by merely spraying the scrubbing solution onto the flue gas.

When contacted with the scrubbing solution, at least some of the impurities of the flue gas, including harmful compounds, are transferred from the flue gas into the scrubbing solution. Thus, the scrubber solution is produced. At least some of the scrubber solution can be let out from the scrubber 200 and conveyed to the fluidized bed boiler 100.

The flue gas 220 may be provided into the scrubber 200 via the first conduit 201. An example of a path of the flue gas 220 is illustrated with arrows.

The aqueous scrubbing solution can be conveyed to the scrubber 200 via the second conduit 203.

Oxidizing gas may be provided into the scrubber 200 via a fourth conduit 208 in order to oxidize at least part of the formed scrubber solution 202 in the scrubber. An example of a path of the oxidizing gas is illustrated with arrows. Alternatively, or in addition, a separate oxidizing tank (not shown) may be provided in order to oxidize at least part of the formed scrubber solution.

The flue gas from which at least some of the harmful compounds and/or other impurities are transferred into the scrubbing solution, is referred to as a flue gas derivate 204. For example, at least some of the sulphur can be scrubbed off from the flue gas by contacting the flue gas with a scrubbing solution that is aqueous and to which has been added magnesium hydroxide. In this way, cleaned gas, i.e., the flue gas derivate 204, can be produced.

The flue gas from which at least some of the impurities are transferred into the scrubbing solution, referred to as a flue gas derivate 204, can be directed out of the scrubber 200.

The scrubber may comprise means for circulating some of the scrubber solution back to the scrubber, such as a third line 212 and at least one pump 210. In this embodiment, the pump 210 can be arranged to pump some of the scrubber solution from the scrubber 200 via line(s) 212, 212b back into the scrubber 200.

In this embodiment, a storage tank (not shown in Figures) may be arranged in the scrubber circulation, which tank may be used as a storage tank for the circulating solution. Thus, the storage tank may be between the first pump 210 and the scrubber 200. This embodiment can improve controllability of the process as the storage tank can be arranged to work as a buffer tank within the process. The storage tank can be particularly useful in order to get some additional time to fix process if the process has some problems. In addition to the storage tank, or alternatively, the first line 205 can serve as a storage for the circulating scrubber solution.

The system may further comprise e.g. another scrubber (not shown) for further removing impurities from the flue gas derivate 204.

### Directing part of the scrubber solution to the boiler

As discussed, at least one pump 210, 261 can be arranged to pump at least part of the scrubber solution from the scrubber 200 via line(s) 211, 263 into the boiler 100. The amount of the scrubber solution expelled from the scrubber and conveyed into the furnace can be controlled.

The system may comprise a first valve 231 for controlling an amount of scrubber solution expelled from the scrubber 200 via the first line 205. The scrubber may further comprise a first processor configured to control the first valve.

Alternatively or in addition, the system may comprise a first sensor for determining an amount of scrubbing solution in the scrubber 200 and a second valve 232 for controlling an inflow of the scrubbing solution to the scrubber 200. The scrubber 200 may further comprise a second processor configured to control the second valve 232 using a signal received from the second sensor. At least one sensor may be located in such a way that, in use, determining a height of a liquid level of the scrubber solution is enabled.

Alternatively, or in addition, the system may comprise a third valve 233 for controlling an amount of scrubber solution conveyed from the scrubber 200 to the boiler 100 via the line 211. The scrubber 200 may further comprise a third processor configured to control the third valve 233.

The system may comprise a cleaning device 260 arranged downstream of the scrubber, between the scrubber and the fluidized bed boiler. The cleaning device can be arranged to provide cleaned water and scrubber solution having reduced water content. The cleaning device may be arranged e.g. to remove some particles in order to provide the cleaned water.

Therefore, the system may comprise a fourth valve 234 for controlling an amount of the scrubber solution expelled from the cleaning device 260 to the boiler 100 via a conduit 263. The scrubber 200 may further comprise a fourth processor configured to control the fourth valve 234. Thus, a processor may be configured to control the fourth valve 234. The cleaning device 260 may remove part of the water from scrubber solution before the scrubber solution is directed to the boiler. The scrubber solution wherefrom part of water is removed can be called as a scrubber sludge.

In these embodiments, the first processor, the second processor, the third processor and the fourth processor may be separate units, or they may be comprised e.g. by a single processor arrangement. Thus, the first processor may be configured to control also the second valve and/or the third valve and/or the fourth valve, or the second processor may be configured to control also the first valve and/or the third valve, and/or the fourth valve etc. Therefore, the system can comprise at least one processor.

As discussed, the system may comprise the cleaning device 260. The cleaning device 260 may be arranged in between the scrubber 200 and the boiler 100. In this embodiment, a third pump 261 can be arranged to pump at least some of the scrubber solution from the cleaning device 260 into the furnace of the fluidized bed boiler via a conduit 263.

At least some of the scrubber solution may be let out from the scrubber 200 via the first line 205 and conveyed towards the boiler via the second line 211. The first pump 210 may be arranged to pump the at least some of the scrubber solution via line 211 towards the furnace of the boiler. The cleaning device 260 may be arranged downstream of the scrubber 200. Thus, the scrubber solution from the scrubber 200 can be introduced into the cleaning device 260. The scrubber solution may be let out from the scrubber via first line 205 and pumped by a pump 210 via a line 211 into the cleaning device 260. Further, a conduit 263 can be configured to feed the scrubber solution, wherefrom at least some water has been removed (i.e., the scrubber sludge), into the furnace of the boiler.

An amount of the scrubber solution pumped towards the fluidized bed boiler can be controlled. In an embodiment, an average amount of scrubber solution conveyed from the scrubber to the boiler can be in a range between 0.1 kg/s and 1.0 kg/s. In an embodiment, a flow rate of the scrubber solution let out from the scrubber 200 via the first line 205 and conveyed towards the boiler via the second line 211 is in a range between 0.1 m³/h and 8 m³/h, preferably in a range between 0.3 m³/h and 6 m³/h, and most preferably in a range between 0.5 m³/h and 4 m³/h.

Temperature of the scrubber solution may be arranged to be in a range between 50°C and 85°C, more preferably in a range between 55°C and 80°C, and most preferably in a range between 60°C and 75°C.

pH of the scrubber solution may be arranged to be in a range between 1 and 6.5, more preferably in a range between 1.5 and 6, and most preferably in a range between 2 and 4. Accurate control of the circulated scrubbing solution pH minimizes magnesium consumption and ensures that emissions can be continuously kept below required emission level.

Thanks to the aqueous scrubbing solution comprising magnesium, the scrubber solution can have very low amount of sodium compounds. Thus, at least part of the scrubber solution can be applied to the furnace of the fluidized bed boiler 100 so that sodium related problems can be avoided.

The aqueous scrubbing solution comprising magnesium may form MgSO₄ with flue gases comprising sulphur. It was surprisingly found that e.g. desulphurization products containing magnesium in their composition can be stable in temperature conditions typical for fluidized bed furnaces, including sintering, softening, melting, and flowing temperatures. Typically, said process temperatures are less than 1100°C, such as in a range between 850°C and 1000°C, or equal to or less than 950°C. Thus, the scrubber solution comprising MgSO₄ may be conveyed back into the boiler.

MgSO₄ can be easily removed from the boiler with an ash as a solid material. For example, NaSO₄ typically decomposes when applied to a furnace of a fluidized bed boiler and, hence, enriches to the process having a circulation between the scrubber and the boiler.

Thanks to the magnesium hydroxide that is used as a scrubbing alkali, the scrubber solution comprising for example MgSO₄ can be conveyed back to the boiler without increased risk of bed sintering or corrosion problem of pressure part.

Due to the aqueous scrubbing solution comprising magnesium hydroxide as the scrubbing alkali, many problems caused e.g. by sodium compounds can be avoided while keeping a production efficiency of the process at a high level. For example, in temperature conditions typical for fluidized bed furnaces Na₂SO₄ could cause remarkable deformation in the furnace. Further, sulphur from the Na₂SO₄ could be part of the produced flue gas. Moreover, Na₂SO₄ solution could cause remarkable risk of bed sintering if fed to the furnace. Melting point of Na₂SO₄ is approximately 886°C, which is within a normal operating temperature of a fluidized bed boiler. Still further, NaOH is a highly poisonous chemical, while magnesium hydroxide is non-poisonous chemical. By using magnesium hydroxide, for example shut down time of the process can be decreased, which can improve efficiency of the system.

The novel system may comprise a circulation comprising a fluidized bed boiler, and a scrubber located downstream of the bed boiler, wherein part of the scrubber solution is circulated back to the fluidized bed boiler. The system may further comprise a slurry tank for the magnesium hydroxide, the slurry tank preferably comprising an agitator. The system may further comprise one or more than one pump, one or more than one valve, one or more than one processor, and several pipes.

The flue gas may comprise sulphur compounds. In this embodiment, the flue gas comprising sulphur compounds is scrubbed with an aqueous scrubbing solution in the scrubber. The pH of the aqueous scrubbing solution may be adjusted with the magnesium hydroxide. A line may be configured to feed the magnesium hydroxide slurry to the aqueous scrubbing solution.

In the scrubber, contact between the flue gas and the aqueous scrubbing solution is enabled. At least some impurities, such as at least some sulphur compounds of the flue gas, react with the magnesium ions, thereby forming magnesium compounds, such as MgSO₄. Thus, the scrubber solution containing magnesium compounds can be produced in the scrubber. The scrubber solution containing the magnesium compounds can be at least partly conveyed to the boiler.

At least some of the scrubber solution may be recirculated back to the scrubber. Thus, the scrubber solution may be divided at least into two portions. By this arrangement, the impurities, such as sulphur compounds, may be converted into magnesium compounds, such as MgSO₄, more efficiently.

The novel solution wherein at least part of the scrubber solution is conveyed to the boiler can be environmentally friendly solution. Further, the usage of magnesium hydroxide can provide non-poisonous chemical for the process. Still further, due to properties of the formed magnesium compounds, such as MgSO₄, sulphur can be removed from the system efficiently and safely as a solid material.

The invention has been described with the aid of illustrations and examples. Many variations of the method and the system will suggest themselves to those skilled in the art in light of the description above. Such obvious variations are within the full intended scope of the appended claims.

## Claims

1. A method for removing harmful compounds from a power plant, the method comprising
- burning at least some material in a furnace of a fluidized bed boiler (100), thereby forming a flue gas,
- conveying the flue gas to a scrubber (200),
- adding magnesium hydroxide to an aqueous scrubbing solution,
- conveying the aqueous scrubbing solution to the scrubber (200),
- scrubbing the flue gas with the aqueous scrubbing solution by contacting the flue gas with the aqueous scrubbing solution in the scrubber, whereby at least some compounds in the flue gas reacts with magnesium ions, thereby producing a scrubber solution containing magnesium compounds,
- conveying at least some of the scrubber solution from the scrubber to the fluidized bed boiler, and
- removing at least some magnesium compounds from the fluidized bed boiler in a solid form.

2. The method according to claim 1, further comprising
- removing at least part of particles from the flue gas before the flue gas is conveyed to the scrubber (200).

3. The method according to claim 1 or 2, wherein the magnesium hydroxide is in a form of magnesium hydroxide slurry comprising
- at least 50 wt.% magnesium hydroxide, calculated from dry solid content of the magnesium hydroxide slurry, and
- less than 10 wt.% calcium, calculated from dry solid content of the magnesium hydroxide slurry.

4. The method according to any of the preceding claims, wherein
- a proportion of calcium compounds is less than 10 % calculated from total amount of calcium and magnesium compounds in the scrubber solution and/or
- a proportion of sodium compounds is less than 5 % calculated from total amount of sodium and magnesium compounds in the scrubber solution.

5. The method according to any of the preceding claims, further comprising:
- mixing the magnesium hydroxide in a slurry tank (250) before adding the magnesium hydroxide to the aqueous scrubbing solution.

6. The method according to any of the preceding claims, further comprising:
- directing part of the scrubber solution into the scrubber (200) for re-scrubbing.

7. The method according to any of the preceding claims, wherein pH of the aqueous scrubbing solution is in a range between 5 and 7.

8. The method according to any of the preceding claims, wherein the flue gas comprises a sulphur oxide or sulphur oxides and the method further comprises
- removing at least part of the sulphur oxide(s) from the flue gas in the scrubber (200).

9. The method according to any of the preceding claims, wherein said material comprises biomass and/or waste.

10. The method according to any of the preceding claims, the method further comprising
- conveying at least part of the scrubber solution into a cleaning device (260) arranged downstream of the scrubber (200), before conveying at least some of the scrubber solution to the fluidized bed boiler.

11. A system arranged to remove harmful compounds from a power plant, the system comprising
- a fluidized bed boiler (100) arranged to form a flue gas,
- a first conduit (201) to feed the flue gas into a scrubber (200),
- a second conduit (203, 212b) configured to convey an aqueous scrubbing solution containing magnesium ions to a scrubber (200),
- the scrubber (200) arranged to produce a scrubber solution containing magnesium compounds by contacting the flue gas with the aqueous scrubbing solution in the scrubber,
- a first line configured to convey at least some of the scrubber solution from the scrubber to a furnace of the fluidized bed boiler (100), and
- means for removing at least some of said magnesium compounds from the fluidized bed boiler in a solid form.

12. The system according to claim 11, wherein the means for removing at least some magnesium compounds comprises a mechanical or pneumatical fly ash removal system.

13. The system according to claim 11 or 12, further comprising a slurry tank (250) for magnesium hydroxide slurry, arranged upstream of the scrubber (200), the slurry tank (250) comprising an agitator.

14. The system according to any of the preceding claims 11 to 13, further comprising
- a particle separator arranged to remove at least some particles from the flue gas.

15. The system according to any of the preceding claims 11 to 14, further comprising
- at least one pump (231, 261) and at least one valve (231, 233, 234) arranged to control a flow of the scrubber solution towards the fluidized bed boiler.

16. The system according to any of the preceding claims 11 to 15, further comprising a cleaning device (260) arranged downstream of the scrubber, between the scrubber and the fluidized bed boiler.

17. A use of magnesium hydroxide as a scrubber alkali in a system comprising
- a fluidized bed boiler (100), and
- a scrubber (200) arranged to produce a scrubber solution,
wherein part of the scrubber solution is conveyed from the scrubber (200) to the fluidized bed boiler (100).
